# EUROPEAN PATENT SPECIFICATION

(11) **EP 2 392 948 B1**
(45) Date of publication and mention of the grant of the patent: **18.11.2020**
(21) Application number: 11167346.3
(22) Date of filing: 24.05.2011
(51) Int. Cl.: G01V 8/10, G01N 21/85, G01N 21/01

(54) **Self-aligning light source and detector assembly**
Sich selbst ausrichtende Lichtquelle und Detektoranordnung
Source lumineuse auto-alignée et ensemble de détection

(30) Priority: 07.06.2010 US 795501; 22.12.2010 US 975597
(43) Date of publication of application: 07.12.2011
(73) Proprietor: ENDRESS + HAUSER, INC., Greenwood, IN 46143 (US)
(72) Inventor: Wynn, William H., San Carlos, CA 94070 (US); Mertens, Guido, 32825 Blomberg (DE); Weiss, Michael, 70839, Gerlingen (DE)
(74) Representative: Andres, Angelika Maria

(56) References cited:
- EP-A1- 1 003 028
- DE-U1- 20 111 588
- US-A- 2 918 585
- US-A- 3 411 005
- US-A- 5 320 808
- US-A1- 2006 262 540
- US-A1- 2008 144 033

## Description

This invention pertains generally to the measurement of optical absorbance and, more particularly, to a self-aligning light source and detector assembly for use in measuring optical absorbance. Instruments for measuring optical absorbance are widely used in fields such as industrial, medical, and food applications. Such instruments generally include a light source and a detector, and for consistent, reliable readings, it is important that the light source and detector remain in proper alignment, particularly when the instruments are used in critical applications.

Light sources such as incandescent lamps tend to burn out and require periodic replacement, which can easily result in improper alignment between light source and detector, particularly in smaller, more compact instruments. If the light source cannot be replaced in the field, then the instrument either has to be replaced or removed from service and sent away for repair, both of which can be expensive and disruptive.

Examples of such light source and detector assemblies can be found e.g. in US5320808, US2918585 or US3411005.

It is, in general, an object of the invention to provide a new and improved light source and detector assembly for use in measuring optical absorbance.

Another object of the invention is to provide a light source and detector assembly of the above character, in which the light source and detector are self-aligning.

These and other objects are achieved in accordance with the invention by providing a self-aligning light source and detector assembly having a sensor support mounted in a predetermined, fixed position, a light source holder mounted in a predetermined, fixed position relative to the sensor support, a sensor mounted in a fixed position on the sensor support, and a lamp assembly removably mounted to the light source holder in a predetermined position defined by mating surfaces which engage each other and seat the lamp assembly in the predetermined position whenever the lamp assembly is installed in the holder.
Figure 1 is an exploded isometric view of one embodiment of a self-aligning light source and detector assembly according to the invention.
Figure 2 is a top plan view of the lamp assembly in the embodiment of Figure 1.
Figure 3 is a top plan view of the assembled light source in the embodiment of Figure 1.
Figure 4 is an enlarged, fragmentary sectional view of the assembled light source.
Figure 5 is an isometric view of the embodiment of Figure 1 with the lamp assembly removed for replacement of the lamp
Figure 6 is a vertical sectional view of the mounting block and associated components in the embodiment of Figure 1.
Figure 7 is a cross-sectional view taken along line 7 - 7 in Figure 6.
Figure 8 is a cross-sectional view taken along line 8 - 8 in Figure 6.
Figure 9 shows the complete probe assembly with the lamp holder and the detector holder mounted in the mounting block, which is fixed to the probe head.

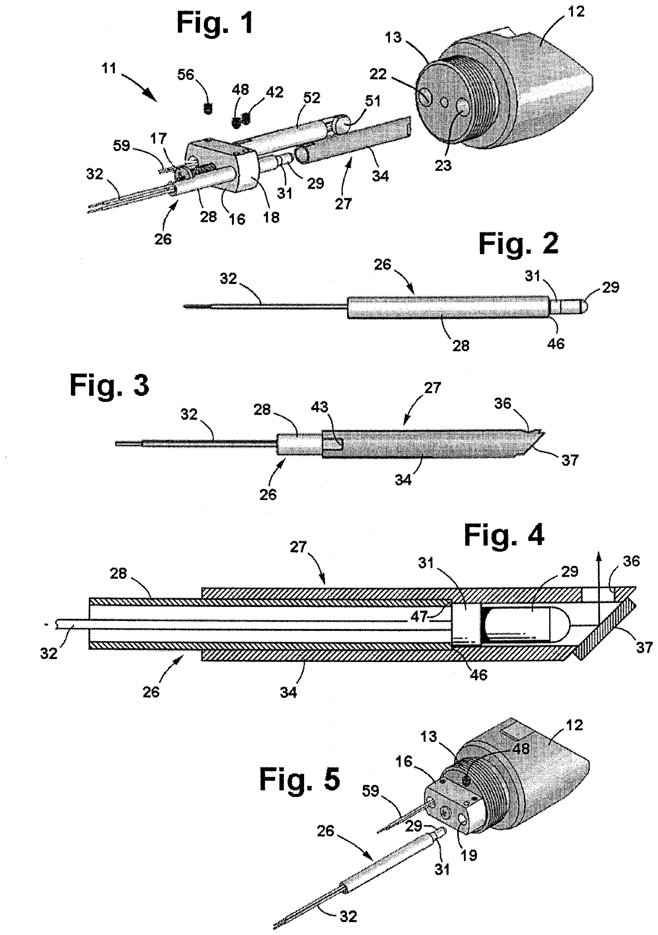

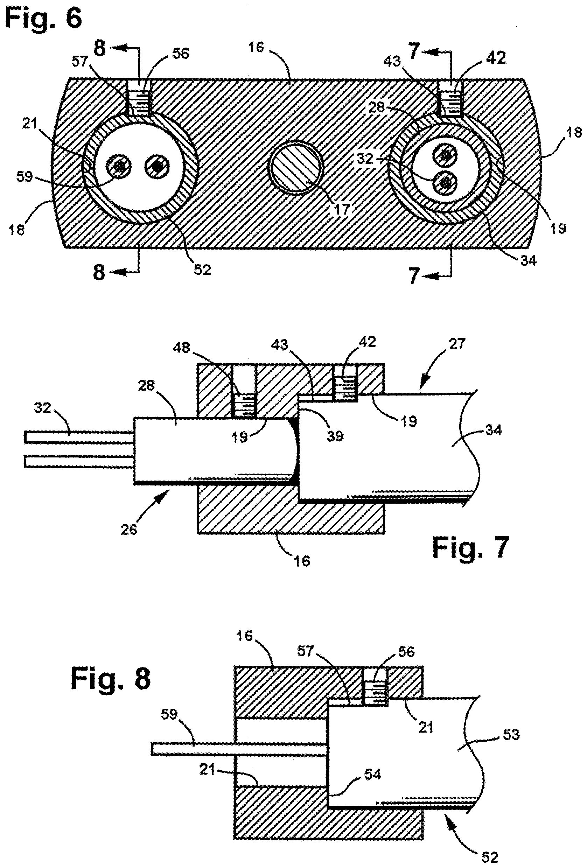

In Figure 1 to 8, the light source and detector assembly 11 is illustrated in connection with a probe head 12 having an externally threaded base 13 that attaches to a generally cylindrical housing (not shown). A mounting block 16 is attached to the inner face of the base 13 by a mounting screw 17. The block is generally rectangular, with arcuately curved end surfaces 18 of slightly smaller diameter than the inner wall of the housing. Axially extending parallel bores 19, 21 extend through the mounting block on opposite sides of the mounting screw in alignment with corresponding bores 22, 23 in the base.

The probe head 12 can as well be designed to attach to a disposable container, such as for example a disposable fermentation bag having flexible walls for single-use in a biotechnological process. In this case the threaded base 13 can be attached to a fixture in the disposable container wall or the base 13 can be designed to be welded to the wall of the disposable container.

The light source consists of a lamp assembly 26 which is removably mounted in a tubular holder 27. The tube holder is mounted in bore 19, passes through bore 22, and extends from the outer end of the probe head 12. The lamp assembly includes an elongated tubular body 28, with a lamp 29 mounted in a socket 31 at one end thereof and leads 32 extending from the socket, through the tubular body for connection to a power source in the probe housing.

The lamp holder has a tubular body 34 with an aperture 36 in the side wall thereof toward the distal or outer end of the tube and a mirror 37 mounted in the distal end portion of the tube for directing light from the lamp through the aperture toward the sensor. In the embodiment illustrated, the mirror is inclined at an angle of 45 degrees to the axis of the lamp holder, and the light from the lamp is reflected in a direction perpendicular to that axis. The aperture 36 can be tightly covered by a transparent window, e.g. made of quartz, sapphire or a transparent plastic depending on the wavelength used for measurement.

The inner end of the lamp holder abuts against a radial shoulder 39 in bore 19 and is secured in place by a set screw 42 in the mounting block which is received in a key way or notch 43 in the outer wall of the lamp holder tube. Thus, when the inner end portion of the tube is inserted in the bore in abutting engagement with the shoulder and the set screw is tightened in the key way, the lamp holder is locked in a predetermined, fixed position both axially and rotatively relative to the mounting block and the probe head.

The lamp assembly is inserted coaxially into the lamp holder through the inner end of the lamp holder tube and has a radial shoulder 46 which abuts against a corresponding shoulder 47 in the tube. The lamp assembly is locked in position in the lamp holder by a set screw 48 in the mounting block which is tightened against the outer wall of the tube. Thus, the lamp assembly can be removed from the holder and then reinserted and locked in a predetermined axial position. The inner end portion of the lamp assembly projects from the inner end of the holder and can be used for rotating the lamp assembly within the holder and mount for maximum optical signal before seating the set screw.

The detector assembly includes a light detector or sensing element 51 and a sensor support 52. The sensor support has an elongated tubular body 53 which is mounted in bore 21, passes through bore 23, and extends from the outer end of the probe head. The inner end of the support tube abuts against a radial shoulder 54 in bore 21 and is secured in place by a set screw 56 in the mounting block. This set screw is received in a key way or notch 57 in the outer wall of the support tube. Thus, when the inner end portion of the tube is inserted in the bore in abutting engagement with the shoulder and the set screw is tightened in the key way, the sensor support is locked in a predetermined, fixed position both axially and rotatively relative to the mounting block, the probe head, and the light source.

Light detector or sensing element 51 is mounted on the side wall of the support tube near the distal end of the tube directly opposite and facing the aperture and mirror in the lamp holder, with leads 59 from the sensing element extending through the tube for connection to circuitry in the probe housing.

To replace the lamp, the probe head is separated from the housing, the set screw 48 is removed, and the lamp assembly is withdrawn from the inner end of the lamp holder, as illustrated in Figure 5. The old lamp is removed from the socket, and a new lamp is installed in its place. The lamp assembly is then reinserted into the holder until shoulder 46 abuts against shoulder 47 and turned to maximize the signal from the detector. With the lamp assembly thus seated in its predetermined position and oriented for best signal, set screw 48 is tightened against the lamp assembly to lock it in place.

The lengths of the lamp holder and the detector assembly are such that when the inner ends of the lamp holder and sensor support tubes are seated against the shoulders in the mounting block bores and the set screws are tightened in the key ways, the sensing element is directly opposite the aperture in the lamp holder, and light reflected from the lamp by the mirror is focused on the sensing element. The alignment is self-guided and will always be the same whether the device is assembled in the factory or serviced in the field.

The alignment of the light source and sensor is not disturbed by replacement of the lamp, since neither the lamp holder nor the detector assembly is moved during the process. Even if one of them did happen to move, it is easily returned its self-aligning position.

The invention has a number of important features and advantages. The light source and detector are self-aligning, and the light source lamp can be replaced in the field without disturbing that alignment.

The lamp assembly is independent of the lamp holder and projection mirror. The lamp assembly can easily be removed for lamp replacement without removal of the lamp holder and mirror which are affixed to the mounting block and probe head. The lengths of the lamp holder and the detector assembly are fixed so that when each assembly is inserted into the mounting block, its position is controlled and the two assemblies are automatically aligned to each other.

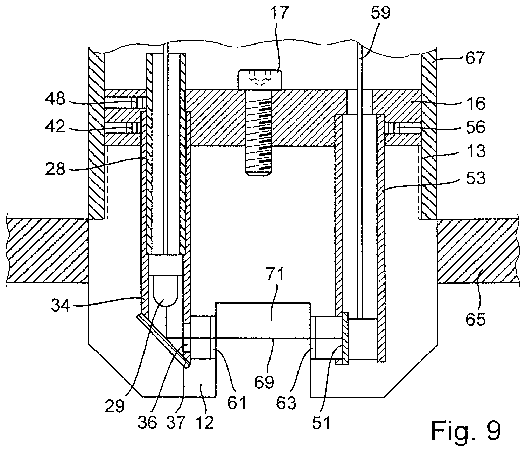

The mounting block 16 with the lamp assembly fixed in bore 19 and the detector assembly fixed in bore 21 forms a readily aligned optical assembly. This assembly can be connected to various different kinds of probe heads as long as they provide an appropriate base with bores corresponding to both the tubular holder 27 of the lamp assembly and the tubular holder 53 of the detector assembly. Figure 9 shows the complete probe assembly with the lamp holder and the detector holder mounted in the mounting block 16, which is fixed to the probe head 12. The threaded base 13 of the probe head 12 is screwed to a cylindrical probe housing 67.

In this example, the sensor assembly and the detector assembly do not protrude from the probe head 12. Instead, the probe head 12 comprises two facing apertures which provide a passage for a light beam 69 reflected from mirror 37. In order to protect the lamp 29 and the sensing element 51 from medium comprised in the gap 71 through which light beam 69 travels, the apertures are sealingly closed by windows 61 and 63. Windows 61 and 63 can be made of any material transparent for the light emitted by the lamp 29. For example, they can be made of quartz, quartz glass, sapphire or transparent plastics.

The probe head 12 is connected to a container wall 65 of a container comprising a medium, for example a liquid or a liquid mixture used in an industrial process. In pharmaceutical or biotechnological processes often single-use containers, so-called disposable containers, are used.

These disposable containers are usually made of plastics that can be sterilized before starting the pharmaceutical or biotechnological process and that can be disposed of after the process has been completed. Disposable containers can be rigid or flexible tubes or flexible bags, for example disposable fermenters. The container wall 65 can be glued or welded to the probe head 12. It can also comprise a fixture comprising for example a bayonet fitting or an internal thread for receiving the probe head 12.

In this way, the readily aligned optical assembly comprising the mounting block 16 with the lamp assembly fixed in bore 19 and the detector assembly fixed in bore 21 can be used several times with different disposable containers having a corresponding probe head 12 fixed in or connected to a container wall 65. After use the probe heads can be disposed of together with the container. The expensive optical assembly, however, can be used again.

It is apparent from the foregoing that a new and improved self-aligning light source and detector assembly has been provided. While only certain presently preferred embodiments have been described in detail, as will be apparent to those familiar with the art, certain changes and modifications can be made without departing from the scope of the invention as defined by the following claims.

## Claims

1. A self-aligning light source and detector assembly (11), comprising:
a mounting block (16),
a sensor support (52) mounted in a first predetermined, fixed position to the mounting block (16),
a light source holder (27) mounted in a second predetermined, fixed position relative to the sensor support (52) to the mounting block (16),
a sensor (51) mounted in a fixed position on the sensor support (52),
the assembly (11) **characterized in that** it comprises
a lamp assembly (26) removably mounted to the light source holder (27) in a predetermined position defined by mating surfaces which engage each other and seat the lamp assembly (26) in the predetermined position whenever the lamp assembly (26) is installed in the light source holder (27),
and wherein the light source holder (27) and the sensor support (52) are received in corresponding bores (22, 23) of a probe head (12).

2. The light source and detector assembly (11) of claim 1,
including a mirror (37) mounted in a fixed position on the light source holder (27) for directing light from the lamp assembly (26) toward the sensor (51) when the lamp assembly (26) is seated in the predetermined position.

3. The light source and detector assembly (11) according to one of the claims 1 to 2,
wherein the light source holder (27) is tubular, and the lamp assembly (26) is disposed coaxially of the tubular holder (27).

4. The light source and detector assembly (11) according to one of the claims 1 to 3,
wherein the lamp assembly (26) and the light source holder (27) have axially facing annular shoulders (46, 47) which abut against each other when the lamp assembly (26) is in the predetermined position.

5. The light source and detector assembly (11) according to one of the claims 1 to 4,
the mounting block (16) having first (21) and second (19) parallel bores with axially facing internal shoulders (39, 54),
the sensor support (52) comprising a first support tube (53) having a first portion in abutting engagement with the annular shoulder (54) in the first bore (21) and a distal end portion extending from the mounting block (16),
the light source holder (27) comprising a second support tube (34) having one portion in abutting engagement with the annular shoulder (39) in the second bore (19) and a distal end portion extending from the mounting block (16) in a direction parallel to the distal end portion of the first support tube (53),
the sensor (51) being mounted in a fixed position on the first support tube (53) facing the second support tube (34),
the lamp assembly (26) being removably installed in a predetermined position in the second support tube (34) with a portion of the lamp assembly (26) in abutting engagement with an axially facing annular shoulder (46) in the second support tube (34),
wherein the light source holder (27) further comprises an aperture (36) for light in a side wall of the second support tube (34) and a mirror (37) for directing light from the lamp assembly (26) through the aperture (38) to the sensor (51).

6. The light source and detector assembly (11) of claim 5,
wherein the mirror (37) is mounted to the distal end portion of the second support tube (34).

7. The light source and detector assembly (11) of claim 5 or 6,
including set screws (42, 56) threadedly mounted in the mounting block (16) for retaining the first (53) and second (34) support tubes in abutting engagement with the annular shoulders (39, 54) in the first (21) and second (19) bores and for retaining the lamp assembly (26) in the predetermined position within the second support tube.

8. The light source and detector assembly (11) of claim 7,
wherein the first (53) and second (34) support tubes have flattened areas which are engaged by the set screws (42, 56) to prevent rotation of the support tubes (34, 53) in the mounting block (16).

9. The light source and detector assembly (11) of one of claims 5 to 8,
wherein the lamp assembly (26) can be rotated within the second support tube (34) for maximum optical signal from the sensor (51).

10. The light source and detector assembly (11) according to one of claims 1 to 9,
said probe head (12) comprising apertures providing a light beam passageway (69) between the lamp assembly (26) and the sensor (51).

11. A measuring system for optical measurements, in particular absorbance measurements, in a process medium comprising:
- a light source and detector assembly (11) according to one of claims 1 to 10, and
- a disposable container in which the process medium is received, the container comprising a container wall (65), in particular a flexible container wall, in which the probe head (12) is accommodated, said probe head (12) comprising axially extending parallel bores (22, 23),
wherein the light source holder (27) and the sensor support (52) of the light source and detector assembly (11) extend through the axially extending parallel bores (22, 23) of the probe head (12).

12. The measuring system according to claim 11,
wherein the probe head (12) comprises apertures providing a light beam passageway (69) between the lamp assembly (26) and the sensor (51).

13. The measuring system of claim 11 or 12,
wherein said light source and detector assembly (11) is removably attached to said probe head (12).

## Patentansprüche

1. Eine selbstausrichtende Lichtquellen- und Detektorbaugruppe (1), Folgendes umfassend:
einen Montageblock (16),
eine Sensorhalterung (52), die in einer ersten vorgegebenen festen Position am Montageblock (16) montiert ist,
einen Lichtquellenhalter (27), der in einer zweiten vorgegebenen festen Position in Bezug auf die Sensorhalterung (52) am Montageblock (16) montiert ist,
einen Sensor (51), der in einer festen Position an der Sensorhalterung (52) montiert ist.
Die Baugruppe (11) ist **dadurch gekennzeichnet ist, dass** sie
eine Lampenbaugruppe (26), die abnehmbar am Lichtquellenhalter (27) in einer vorgegebenen Position, die definiert ist durch Passflächen, die ineinandergreifen und die Lampenbaugruppe (26) in der vorgegebenen Position aufnehmen, wenn die Lampenbaugruppe (26) im Lichtquellenhalter (27) installiert ist, montiert ist, umfasst, wobei der Lichtquellenhalter (27) und die Sensorhalterung (52) in entsprechenden Bohrlöchern (22, 23) eines Sondenkopfs (12) eingesetzt sind.

2. Die Lichtquellen- und Detektorbaugruppe (11) aus Anspruch 1, einschließlich eines Spiegels (37), der in einer festen Position am Lichtquellenhalter (27) installiert ist, um Licht von der Lampenbaugruppe (26) zum Sensor (51) zu leiten, wenn sich die Lampenbaugruppe (26) in der vorgegebenen Position befindet.

3. Die Lichtquellen- und Detektorbaugruppe (11) nach einem der Ansprüche 1 bis 2, wobei der Lichtquellenhalter (27) rohrförmig ist und die Lampenbaugruppe (26) koaxial zum rohrförmigen Halter (27) positioniert ist.

4. Die Lichtquellen- und Detektorbaugruppe (11) nach einem der Ansprüche 1 bis 3, wobei die Lampenbaugruppe (26) und der Lichtquellenhalter (27) axial gegenüberliegende ringförmige Absätze (46, 47) aufweisen, die aneinander anliegen, wenn sich die Lampenbaugruppe (26) in der vorgegebenen Position befindet.

5. Die Lichtquellen- und Detektorbaugruppe (11) nach einem der Ansprüche 1 bis 4, wobei der Montageblock (16) über erste (21) und zweite (19) parallele Bohrlöcher mit axial gegenüberliegenden inneren Absätzen (39, 54) verfügt,
die Sensorhalterung (52) ein erstes Halterungsrohr (53) mit einem ersten Abschnitt in Anlageeingriff mit dem ringförmigen Absatz (54) im ersten Bohrloch (21) und einem distalen Endabschnitt, der aus dem Montageblock (16) herausragt, umfasst,
der Lichtquellenhalter (27) ein zweites Halterungsrohr (34) mit einem Abschnitt in Anlageeingriff mit dem ringförmigen Absatz (39) im zweiten Bohrloch (19) und einem distalen Endabschnitt, der über den Montageblock (16) in einer parallelen Richtung zum distalen Endabschnitt des ersten Halterungsrohrs (53) herausragt, umfasst,
der Sensor (51) in einer festen Position am ersten Halterungsrohr (53) gegenüber dem zweiten Halterungsrohr (34) montiert ist,
die Lampenbaugruppe (26) entfernbar in einer vorgegebenen Position im zweiten Halterungsrohr (34) mit einem Abschnitt der Lampenbaugruppe (26) im Anlageeingriff mit einem axial gegenüberliegenden ringförmigen Absatz (46) im zweiten Halterungsrohr (34) installiert ist,
wobei der Lichtquellenhalter (27) des Weiteren über eine Öffnung (36) für Licht in einer Seitenwand des zweiten Halterungsrohrs (34) und einen Spiegel (37) für die Leitung des Lichts von der Lampenbaugruppe (26) durch die Öffnung (38) zum Sensor (51) verfügt.

6. Die Lichtquellen- und Detektorbaugruppe (11) aus Anspruch 5,
wobei der Spiegel (37) am distalen Endabschnitt des zweiten Halterungsrohrs (34) montiert ist.

7. Die Lichtquellen- und Detektorbaugruppe (11) aus Anspruch 5 oder 6,
beinhaltend im Montageblock (16) geschraubt montierte Einstellschrauben (42, 56) zur Sicherung des ersten (53) und zweiten (34) Halterungsrohrs in Anlageeingriff mit den ringförmigen Absätzen (39, 54) im ersten (21) und zweiten (19) Bohrloch und für die Sicherung der Lampenbaugruppe (26) in der vorgegebenen Position im zweiten Halterungsrohr.

8. Die Lichtquellen- und Detektorbaugruppe (11) aus Anspruch 7,
wobei das erste (53) und zweite (34) Halterungsrohr abgeflachte Bereiche aufweisen, die mittels der Einstellschrauben (42, 56) ineinandergreifen, um die Drehung der Halterungsrohre (34, 53) im Montageblock (16) zu verhindern.

9. Die Lichtquellen- und Detektorbaugruppe (11) aus einem der Ansprüche 5 bis 8, wobei die Lampenbaugruppe (26) im zweiten Halterungsrohr (34) für ein maximales optisches Signal vom Sensor (51) gedreht werden kann.

10. Die Lichtquellen- und Detektorbaugruppe (11) nach einem der Ansprüche 1 bis 9, wobei besagter Sondenkopf (12) Öffnungen umfasst, die einen Lichtstrahldurchgang (69) zwischen der Lampenbaugruppe (26) und dem Sensor (51) ermöglichen.

11. Ein Messsystem für optische Messungen, insbesondere Extinktionsmessungen, in einem Prozessmedium, Folgendes umfassend:
- eine Lichtquellen -und Detektorbaugruppe (11) nach einem der Ansprüche 1 bis 10, und
- einen Einwegbehälter, in dem das Prozessmedium aufgefangen wird, wobei der Behälter eine Behälterwand (65), insbesondere eine flexible Behälterwand, umfasst, in der sich der Sondenkopf (12) befindet, und besagter Sondenkopf (12) sich axial erstreckende parallele Bohrlöcher (22, 23) umfasst, wobei der Lichtquellenhalter (27) und die Sensorhalterung (52) der Lichtquellen- und Detektorbaugruppe (11) durch die sich axial erstreckenden parallelen Bohrlöcher (22, 23) des Sondenkopfs (12) reichen.

12. Das Messsystem nach Anspruch 11,
wobei der Sondenkopf (12) Öffnungen umfasst, die einen Lichtstrahldurchgang (69) zwischen der Lampenbaugruppe (26) und dem Sensor (51) ermöglichen.

13. Das Messsystem aus Anspruch 11 oder 12,
wobei besagte Lichtquellen- und Detektorbaugruppe (11) entfernbar an besagtem Sondenkopf (12) befestigt ist.

## Revendications

1. Ensemble de source lumineuse et de détecteur (11) à alignement automatique, comprenant :
un bloc de montage (16),
un support de capteur (52) monté dans une première position fixe, prédéterminée, par rapport au bloc de montage (16),
un support de source lumineuse (27) montée dans une deuxième position fixe, prédéterminée, par rapport au support de capteur (52) et au bloc de montage (16),
un capteur (51) monté dans une position fixe sur le support de capteur (52), l'ensemble (11) étant **caractérisé en ce qu'**il comprend
un ensemble de lampe (26) monté de manière amovible sur le support de source lumineuse (27) dans une position prédéterminée définie par des surfaces de contact qui s'engagent l'une dans l'autre et font reposer l'ensemble de lampe (26) dans la position prédéterminée chaque fois que l'ensemble de lampe (26) est installé dans le support de source lumineuse (27), et le support de source lumineuse (27) et le support de capteur (52) étant reçus dans des alésages correspondants (22, 23) d'une tête de sonde (12).

2. Ensemble de source lumineuse et de détecteur (11) selon la revendication 1, comprenant un miroir (37) monté dans une position fixe sur le support de source lumineuse (27) pour diriger la lumière de l'ensemble de lampe (26) vers le capteur (51) lorsque l'ensemble de lampe (26) est placé dans la position prédéterminée.

3. Ensemble de source lumineuse et de détecteur (11) selon l'une des revendications 1 à 2, pour lequel le support de source lumineuse (27) est tubulaire, et l'ensemble de lampe (26) est disposé coaxialement au support tubulaire (27).

4. Ensemble de source lumineuse et de détecteur (11) selon l'une des revendications 1 à 3, pour lequel l'ensemble de lampe (26) et le support de source lumineuse (27) présentent des épaulements annulaires (46, 47) orientés axialement, qui viennent en butée l'un contre l'autre lorsque l'ensemble de lampe (26) est dans la position prédéterminée.

5. Ensemble de source lumineuse et de détecteur (11) selon l'une des revendications 1 à 4, pour lequel le bloc de montage (16) présente un premier (21) et un deuxième (19) alésages parallèles avec des épaulements internes (39, 54) orientés axialement,
le support de capteur (52) comprenant un premier tube de support (53) ayant une première partie en contact de butée avec l'épaulement annulaire (54) dans le premier alésage (21) et une partie d'extrémité distale s'étendant depuis le bloc de montage (16),
le support de source lumineuse (27) comprenant un deuxième tube de support (34) ayant une partie en contact de butée avec l'épaulement annulaire (39) dans le deuxième alésage (19) et une partie d'extrémité distale s'étendant depuis le bloc de montage (16) dans une direction parallèle à la partie d'extrémité distale du premier tube de support (53),
le capteur (51) étant monté en position fixe sur le premier tube de support (53) face au deuxième tube de support (34),
l'ensemble de lampe (26) étant installé de manière amovible dans une position prédéterminée dans le deuxième tube de support (34), une partie de l'ensemble de lampe (26) étant en contact de butée avec un épaulement annulaire (46) orienté axialement dans le deuxième tube de support (34),
le support de source lumineuse (27) comprenant en outre une ouverture (36) pour la lumière dans une paroi latérale du deuxième tube de support (34) et un miroir (37) pour diriger la lumière de l'ensemble de lampe (26) à travers l'ouverture (38) vers le capteur (51).

6. Ensemble de source lumineuse et de détecteur (11) selon la revendication 5, pour lequel le miroir (37) est monté sur la partie d'extrémité distale du deuxième tube de support (34).

7. Ensemble de source lumineuse et de détecteur (11) selon la revendication 5 ou 6, comprenant des vis d'arrêt (42, 56) vissées dans le bloc de montage (16) pour maintenir le premier (53) et le deuxième (34) tube de support en contact de butée avec les épaulements annulaires (39, 54) dans le premier (21) et le deuxième (19) alésages et pour maintenir l'ensemble de lampe (26) dans la position prédéterminée à l'intérieur du deuxième tube de support.

8. Ensemble de source lumineuse et de détecteur (11) selon la revendication 7, pour lequel le premier (53) et le deuxième (34) tubes de support présentent des zones aplaties qui permettent, par l'engagement des vis d'arrêt (42, 56), d'empêcher la rotation des tubes de support (34, 53) dans le bloc de montage (16).

9. Ensemble de source lumineuse et de détecteur (11) selon l'une des revendications 5 à 8,
pour lequel l'ensemble de lampe (26) peut être tourné à l'intérieur du deuxième tube de support (34) pour un signal optique maximal provenant du capteur (51).

10. Ensemble de source lumineuse et de détecteur (11) selon l'une des revendications 1 à 9, pour laquelle la tête de sonde (12) comprend des ouvertures fournissant un passage de faisceau lumineux (69) entre l'ensemble de lampe (26) et le capteur (51).

11. Système de mesure destiné à des mesures optiques, notamment des mesures d'absorbance, dans un produit de process, lequel système comprend :
- une source lumineuse et un ensemble détecteur (11) selon l'une des revendications 1 à 10, et
- un récipient jetable dans lequel le produit de process est reçu, le récipient comprenant une paroi de récipient (65), notamment une paroi de récipient flexible, dans laquelle est logée la tête de sonde (12), ladite tête de sonde (12) comprenant des alésages parallèles (22, 23) s'étendant axialement, le support de source lumineuse (27) et le support de capteur (52) de l'ensemble de source lumineuse et de détecteur (11) s'étendant à travers les alésages parallèles (22, 23) s'étendant axialement de la tête de sonde (12).

12. Système de mesure selon la revendication 11,
pour lequel la tête de sonde (12) comprend des ouvertures fournissant un passage de faisceau lumineux (69) entre l'ensemble de lampe (26) et le capteur (51).

13. Système de mesure selon la revendication 11 ou 12,
pour lequel l'ensemble de source lumineuse et de détecteur (11) est fixé de manière amovible à la tête de sonde (12).
